# EUROPEAN PATENT SPECIFICATION

(11) **EP 4 077 571 B1**
(45) Date of publication and mention of the grant of the patent: **13.11.2024**
(21) Application number: 20839514.5
(22) Date of filing: 18.12.2020
(51) Int. Cl.: C09J 123/20

(54) **METALLOCENE-CATALYZED POLYBUTENE-1 HOT MELT ADHESIVE COMPOSITION AND ARTICLES INCLUDING THE SAME**
METALLOCEN-KATALYSIERTE POLYBUTEN-1-SCHMELZKLEBSTOFFZUSAMMENSETZUNG UND DIESE ENTHALTENDE GEGENSTÄNDE
COMPOSITION ADHÉSIVE THERMOFUSIBLE À BASE DE POLYBUT-1-ÈNE FORMÉ PAR CATALYSE AVEC UN MÉTALLOCÈNE ET ARTICLES COMPRENANT CELLE-CI

(30) Priority: 20.12.2019 US 201962951855 P
(43) Date of publication of application: 26.10.2022
(73) Proprietor: H.B. Fuller Company, St. Paul, Minnesota 55164-0683 (US)
(72) Inventor: DAVIS, Kevin, P., Woodbury, MN 55129 (US); WELTON, James, E., Coon Rapids, MN 55433 (US); PEDERSON, Adam, M., Blaine, MN 55434 (US)
(74) Representative: Maiwald GmbH
(86) International application number: PCT/US2020/065876
(87) International publication number: WO 2021/127351

(56) References cited:
- WO-A1-2015/074830
- WO-A1-2018/007451

## Description

### BACKGROUND

The invention is directed to formulating hot melt adhesive compositions using metallocene-catalyzed polybutene-1.

In the past, polybutene-1 homopolymers and copolymers were made using a Ziegler-Natta catalyst. These polybutene-1 polymers exhibited high melt viscosities and had to be treated with organic peroxides to decrease the molecular weight and therefore the melt viscosity of the polymers to render them suitable for use in existing hot melt adhesive applicators. The molecular weight of the resulting product was random and difficult to control and resulted in highly variable products.

The high viscosity polybutene-1 polymers also were brittle at room temperature and produced adhesives that were brittle at room temperature. The brittle properties enabled the formulation of hot melt adhesives that could temporarily bond substrates together for a period of time and then allow the substrates to be easily separated without a negative aesthetic alteration of the substrate's surface. Such adhesive compositions have been used to hold pallets of packaged products together during shipping. After shipping, the packaged products can be easily separated from one another at their destination.

Recently, polybutene-1 homopolymers and copolymers synthesized using metallocene catalysts have become available and have been described as being useful for incorporation into hot melt adhesive compositions that include a liquid or non-solid viscosity modifier such as plasticizing oils and greases. The presence of a non-solid viscosity modifier can the impact set time of the adhesive. Such hot melt adhesive compositions have been described as being suitable for use in manufacturing disposable hygiene articles including bonding porous substrates, such as nonwoven webs, for use in diaper constructions.

Hot melt adhesives are used in a variety of applications in the packaging industry including, e.g., case and carton sealing, tray forming and box forming. Typical substrates used in packaging applications include virgin and recycled kraft, high and low density kraft, chipboard and various types of treated and coated kraft and chipboard. To be useful, hot melt adhesive compositions must be capable of forming a fiber tearing bond to such substrates at room temperature. In addition, many packaging applications require the hot melt adhesive to exhibit a sufficient degree of adhesion to the substrate to firmly hold the resulting package together under a variety of conditions such as low temperatures, high temperatures, and stress and to be free of staining. WO 2015/074830 A1 and WO 2018/007451 A1 both disclose hot melt adhesive polyolefin compositions comprising metallocene catalyzed butene-1
copolymers.

There is a need for a hot melt adhesive composition that exhibits good adhesion to case and carton substrates under a variety of conditions. There is a particular need for a hot melt adhesive composition that exhibits good adhesion, under a variety of conditions, to difficult to bond substrates of the type used in case and carton sealing.

### SUMMARY

In one aspect, the invention features a hot melt adhesive composition that includes at least 40 % by weight metallocene-catalyzed polybutene-1, the metallocene-catalyzed polybutene-1 being selected from the group consisting of polybutene-1 homopolymer, polybutene-1 copolymer, and combinations thereof, the metallocene-catalyzed polybutene-1 comprising at least 30 % by weight, based on the weight of the hot melt adhesive composition, of a first metallocene-catalyzed polybutene-1 having a melt flow rate of at least 1000 grams per 10 minutes (g/10 min) at 190 °C, tackifying agent, and at least 15 % by weight wax as defined in claim 1, the hot melt adhesive composition having a specific gravity of less than 0.95.

In one embodiment, the hot melt adhesive composition includes at least 50 % by weight, or even greater than 50 % by weight, metallocene-catalyzed polybutene-1. In another embodiment, the hot melt adhesive composition includes at least 55 % by weight, or even greater than 55 % by weight, metallocene-catalyzed polybutene-1.

In other embodiments, the hot melt adhesive composition includes at least 45 % by weight metallocene-catalyzed polybutene-1 and at least, or even greater than, 15 % by weight of a wax having a melt temperature (Tm) of at least 100 °C. In other embodiments, the hot melt adhesive composition includes at least, or even greater than, 45 % by weight metallocene-catalyzed polybutene-1, and at least, or even greater than, 15 % by weight of a wax having a Tm of at least 110 °C. In other embodiments, the hot melt adhesive composition includes at least 50 % by weight, or even greater than 50 % by weight, metallocene-catalyzed polybutene-1, and at least, or even greater than, 15 % by weight of a wax having a Tm of at least 110 °C.

In one embodiment, the hot melt adhesive composition includes at least 50 % by weight, or even greater than 50 % by weight, metallocene-catalyzed polybutene-1 having a melt flow rate of at least 1000 g/10 min at 190 °C and a specific gravity of no greater than 0.91. In another embodiment, the hot melt adhesive composition includes at least 50 % by weight, or even greater than 50 % by weight, metallocene-catalyzed polybutene-1 having a melt flow rate of at least 1000 g/10 min at 190 °C and a specific gravity of no greater than 0.90. In some embodiments, the hot melt adhesive composition includes from 55 % by weight to 89 % by weight metallocene-catalyzed polybutene-1. In other embodiments, the hot melt adhesive composition includes from 55 % by weight to 89 % by weight metallocene-catalyzed polybutene-1, no greater than 25 % by weight tackifying agent, and at least 10 % by weight of a wax having a melt temperature of at least, or even greater than, 103 °C.

In some embodiments, the hot melt adhesive composition includes no greater than 30 % by weight tackifying agent. In other embodiments, the hot melt adhesive composition includes no greater than 25 % by weight tackifying agent.

In some embodiments, the first metallocene-catalyzed polybutene-1 has a specific gravity of no greater than 0.91. In other embodiments, the first metallocene-catalyzed polybutene-1 has a specific gravity of no greater than 0.90.

In some embodiments, the hot melt adhesive composition has a specific gravity of no greater than 0.94. In other embodiments, the hot melt adhesive composition has a specific gravity of no greater than 0.93.

In another embodiment, the hot melt adhesive composition includes at least 20 % by weight of a wax having a Tm of at least 100 °C. In other embodiments, the hot melt adhesive composition includes greater than 10 % by weight of a wax having a Tm of at least 103 °C. In other embodiments, the hot melt adhesive composition includes at least, or even greater than, 15 % by weight of a wax having a Tm of at least 103 °C. In other embodiments, the hot melt adhesive composition includes at least, or even greater than, 15 % by weight of a wax having a Tm of at least, or even greater than, 110 °C. In one embodiment, the hot melt adhesive composition includes at least, or even greater than, 15 % by weight of a wax having a Tm at least, or even greater than, 112 °C. In another embodiment, the hot melt adhesive composition includes at least, or even greater than, 15 % by weight of a wax having a Tm at least, or even greater than, 120 °C.

In some embodiments, the hot melt adhesive composition has a viscosity of no greater than 3500 mPa·s (centipoise) at 177 °C. In other embodiments, the hot melt adhesive composition has a viscosity of no greater than 3000 mPa·s (cP) at 177 °C. In other embodiments, the hot melt adhesive composition has a viscosity of no greater than 2000 mPa·s (cP) at 177 °C.

In other embodiments, the first metallocene-catalyzed polybutene-1 has a melt flow rate greater than 1300 g/10 min at 190°C.

In another embodiment, the hot melt adhesive composition further includes a second metallocene-catalyzed polybutene-1 having a melt flow rate less than 800 g/10 min at 190 °C and a specific gravity of less than 0.92.

In another embodiment, the hot melt adhesive composition further includes a second metallocene-catalyzed polybutene-1, the second metallocene-catalyzed polybutene-1 having a melt flow rate from 1000 g/10 min to 1300 g/10 min at 190 °C.

In other embodiments, the hot melt adhesive composition further includes a semi-crystalline polymer selected from the group consisting of propylene/ethylene copolymer, ethylene/propylene copolymer, and combinations thereof.

In one embodiment, the hot melt adhesive composition exhibits at least 45 % fiber tear at 23 °C when tested according to the % Fiber Tear PRATT Test Method. In another embodiment, the hot melt adhesive composition exhibits at least 45 % fiber tear at 23 °C when tested according to the % Fiber Tear PRATT Test Method and at least 50 % fiber tear at -29 °C when tested according to the % Fiber Tear PRATT Test Method.

In other aspects, the invention features a package that includes a hot melt adhesive composition disclosed above and herein, a first substrate that includes fibers and a second substrate that includes fibers, the second substrate bonded to the first substrate through the adhesive composition.

The present invention features hot melt adhesive compositions that include relatively high levels of polybutene-1 polymer and that maintain fiber tearing bonds to fibrous substrates at room temperature. The present invention also features embodiments of the hot melt adhesive composition that include relatively high levels of polybutene-1 polymer and that maintain fiber tearing bonds to difficult to bond substrates at room temperature. The present invention also features embodiments of the hot melt adhesive composition that include relatively high levels of polybutene-1 polymer and that maintain fiber tearing bonds to difficult to bond substrates at low temperatures. The present invention also features hot melt adhesive compositions that include relatively high levels of polybutene-1 polymer and exhibit a viscosity suitable for application using hot melt applicator equipment.

Other features and advantages will be apparent from the following description of the preferred embodiments and from the claims.

### GLOSSARY

In reference to the invention, these terms have the meanings set forth below:
The term "polybutene-1 copolymer" means a copolymer derived from at least 50 % by weight butene-1 and less than 50 % by weight alpha-olefin comonomer.
The term "wax" as used herein means a polymer or an oligomer having a heat of fusion greater than 58 Joules per gram (J/g) and a viscosity no greater than 750 mPa·s (centipoise, cP) at 190 °C.
The term "semi-crystalline polymer" means a polymer having a heat of fusion from greater than 10 J/g to no greater than 58 J/g and a viscosity of at least 750 mPa·s (cP) at 190 °C.

### DETAILED DESCRIPTION

The hot melt adhesive composition includes metallocene-catalyzed polybutene-1 having a melt flow rate of at least 1000 g/10 min at 190 °C, tackifying agent, and at least 15 % by weight wax. The hot melt adhesive composition exhibits fiber tearing bonds to fibrous packaging materials at room temperature and preferably exhibits fiber tearing bonds at high and low temperatures. The reference to fiber tear at a temperature refers to the temperature at which the test sample used to measure fiber tear is conditioned.

At 23 °C, the hot melt adhesive composition exhibits greater than 35 %, greater than 40 %, greater than 45 %, greater than 47 %, greater than 50 %, greater than 55 %, greater than 60 %, or even greater than 70 % fiber tear. At 60 °C, or even at 71 °C, the hot melt adhesive composition exhibits greater than 45 %, greater than 50 %, or even greater than 60 % fiber tear. At low temperatures such as 4 °C, -18 °C, or even -29 °C, the hot melt adhesive composition preferably exhibits greater than 45 %, greater than 50 %, or even greater than 60 % fiber tear. The hot melt adhesive composition can be formulated to exhibit any combination of the aforementioned fiber tear properties. The hot melt adhesive composition also can be formulated to exhibit any combination of the aforementioned fiber tear properties when measured using a relatively easy to bond substrate such as WESTROCK 44-pound edge crush C flute corrugated linear board with greater than 80 % recycled fibers ("WESTROCK 44") or even when measured using a relatively hard to bond substrate such as PRATT 44 pound edge crush test (ECT) with C style flute corrugated liner board ("PRATT") that includes 100 % recycled fibers at room temperature.

The hot melt adhesive composition also preferably has a specific gravity of less than 0.95, no greater than 0.94, or even no greater than 0.93.

The hot melt adhesive composition preferably has a viscosity of less than 3000 mPa·s (cP), less than 2500 mPa·s (cP), no greater than 2000 mPa·s (cP), no greater than 1500 mPa·s (cP), no greater than 1200 mPa·s (cP), or even no greater than 1000 mPa·s (cP) at 190 °C, or even at 177 °C.

The hot melt adhesive composition exhibits a fast set time, and preferably exhibits a set time of no greater than 5 seconds, no greater than 4 seconds, no greater than 2 seconds, no greater than 1.5 seconds, no greater than 1 second, or even no greater than 0.8 seconds.

The hot melt adhesive composition also exhibits good heat resistance as measured by Peel Adhesion Failure Temperature (PAFT), Shear Adhesion Failure Temperature (SAFT), heat stress resistance (IOPP), or a combination thereof. Preferably the hot melt adhesive composition exhibits a PAFT of at least 43 °C, at least 49 °C, at least 54 °C, or even at least 63 °C, a SAFT of at least 73 °C, at least 88 °C, or even at least 93 °C, an IOPP of at least 49 °C, at least 54 °C, or even at least 63 °C, or a combination thereof.

A formulation of the hot melt adhesive composition that is particularly useful for maintaining a fiber tearing bond to relatively hard to bond substrates at room temperature includes a tackifying agent, at least 15 % by weight wax of which at least 10 % by weight, based on the weight of the hot melt adhesive composition, is a wax having a Tm greater than 100 °C, and greater than 40 % by weight of a metallocene-catalyzed polybutene-1 polymer of which at least 30 % by weight, based on the weight of the adhesive composition, is a metallocene-catalyzed polybutene-1 having melt flow rate greater than 1000 g/10 min at 190 °C.

Another formulation of the hot melt adhesive composition that is particularly useful for maintaining a fiber tearing bond to relatively hard to bond substrates at room temperature includes a tackifying agent, at least 15 % by weight wax, and greater than 55 % by weight of a metallocene-catalyzed polybutene-1 polymer having a melt flow rate greater than 1000 g/10 min at 190 °C.

A formulation of the hot melt adhesive composition that is particularly useful for maintaining a fiber tearing bond to hard to bond substrates at low temperature, such as 4 °C, includes no greater than 25 % by weight tackifying agent, at least 50 % by weight of a metallocene-catalyzed polybutene-1 polymer, of which at least 30 % by weight, based on the weight of the hot melt adhesive composition, is a metallocene-catalyzed polybutene-1 polymer having a melt flow rate greater than 1000 g/10 min at 190 °C and a specific gravity of no greater than 0.90, and at least 20 % by weight of a wax having a Tm of at least 100 °C, at least 103 °C or even at least 110 °C.

A formulation of the hot melt adhesive composition that is particularly useful for maintaining a fiber tearing bond to hard to bond substrates at low temperature, such as -29 °C, includes no greater than 25 % by weight tackifying agent, at least 50 % by weight of a metallocene-catalyzed polybutene-1 polymer, of which at least 30 % by weight, based on the weight of the hot melt adhesive composition, is a metallocene-catalyzed polybutene-1 polymer having a melt flow rate greater than 1000 g/10 min at 190 °C and a specific gravity of no greater than 0.90, and at least 20 % by weight of a wax having a Tm of at least 103 °C or even at least 110 °C.

### METALLOCENE-CATALYZED POLYBUTENE-1

The hot melt adhesive composition includes metallocene-catalyzed polybutene-1. At least 30 % by weight of the metallocene-catalyzed polybutene-1 that is present in the hot melt adhesive composition has a melt flow rate of at least 1000 g/10 min, at least 1100 g/10 min, at least 1400 g/10 min, no greater than 10,000 g/10 min, or even from 1000 g/10 min to 3000 g/10 min at 190 °C using a 2.16 kg load when tested according to ASTM D1238A. The metallocene-catalyzed polybutene-1 also preferably has a specific gravity no greater than 0.92, no greater than 0.91, no greater than 0.90, or even about 0.89.

Suitable metallocene-catalyzed polybutene-1 polymers include metallocene-catalyzed polybutene-1 homopolymers, metallocene-catalyzed polybutene-1 copolymers, and combinations thereof. Metallocene-catalyzed polybutene-1 copolymers are derived from at least 50 % by weight butene and less than 50 % by weight alpha-olefin comonomer. Useful alpha-olefin comonomers include, e.g., ethylene, propylene, hexene, octene, and combinations thereof.

The metallocene-catalyzed polybutene-1 optionally is a mixture of at least two different metallocene-catalyzed polybutene-1 polymers including, e.g., at least one metallocene-catalyzed polybutene-1 having a first melt flow rate or a first specific gravity and a metallocene-catalyzed polybutene-1 having a second melt flow rate or a second specific gravity either or both of which are different from the first melt flow rate or first specific gravity. One example of a useful metallocene-catalyzed polybutene-1 mixture includes a first metallocene-catalyzed polybutene-1 having a melt flow rate of at least 1000 g/10 min and a specific gravity of no greater than 0.90 and a second metallocene-catalyzed polybutene-1 having an melt flow rate of at least 1000 g/10 min and a specific gravity of no greater than 0.91.

Useful metallocene-catalyzed polybutene-1 polymers are commercially available under a variety of trade designations including, e.g., KOATTRO series of trade designation from LyondellBasell Industries Holdings, B.V. (Netherlands) including KOATTRO PB M 1500M random polybutene-1/ethylene copolymer and KOATTRO PB M 1200M random po lybutene-1 /ethylene copolymer.

The hot melt adhesive composition includes at least 40 % by weight metallocene-catalyzed polybutene-1, and at least 30 % by weight, at least 35 % by weight, at least 40 % by weight, at least 45 % by weight, at least 50 % by weight, greater than 50 % by weight, at least 55 % by weight, greater than 55 % by weight, at least 60 % by weight, no greater than 89 % by weight, no greater than 80 % by weight, no greater than 75 % by weight, from 30 % by weight to 89 % by weight, from 55 % by weight to 89 % by weight, from 50 % by weight to 75 % by weight, or even from 55 % by weight to 75 % by weight, based on the weight of the hot melt adhesive composition, of a metallocene-catalyzed polybutene-1 having a melt flow rate of at least 1000 g/10 min at 190 °C.

The metallocene-catalyzed polybutene-1 optionally additionally includes a metallocene-catalyzed polybutene-1 that has a melt flow rate of greater than 500 g/10 min and less than 1000 g/10 min at 190 °C. One example of a useful commercially available metallocene-catalyzed polybutene-1 that has a melt flow rate less than 1000 g/10 min at 190 °C is KOATTRO PB M 600M random polybutene-1/ethylene copolymer from LyondellBasell. The optional metallocene-catalyzed polybutene-1, when present in the hot melt adhesive composition, is present in an amount less than 45 % by weight, less than 40 % by weight, less than 35 % by weight, less than 30 % by weight, from 0 % by weight to 35 % by weight, or even from 10 % by weight to 30 % by weight.

### ADDITIONAL POLYMER

The hot melt adhesive composition optionally includes at least one polymer other than the metallocene-catalyzed polybutene-1. The total polymer content in the hot melt adhesive composition is at least 40 % by weight, at least 45 % by weight, at least 50 % by weight, greater than 50 % by weight, at least 55 % by weight, at least 60 % by weight, no greater than 89 % by weight, no greater than 80 % by weight, or even no greater than 75 % by weight.

Useful additional polymers include semi-crystalline polymers such as semi-crystalline polyolefins including, e.g., semi-crystalline polypropylene, semi-crystalline propylene/alpha olefin comonomer copolymers (e.g., semi-crystalline propylene/ethylene copolymers), semi-crystalline ethylene/alpha olefin comonomer copolymers (e.g., semi-crystalline ethylene/propylene copolymers), and combinations thereof. Useful semi-crystalline polyolefins are disclosed in a number of U.S. Patents including, e.g., US 9,752,024 (Barry et al.), US 8,822,598 (Li Pi Shan et al.) and US 10,155,889 (Jin et al.).

Useful semi-crystalline propylene copolymers are derived from propylene and an alpha-olefin co-monomer including, e.g., alpha-olefin monomers having at least two carbon atoms, at least four carbon atoms, from four carbon atoms to eight carbon atoms, and combinations of such monomers). Suitable alpha-olefin co-monomers include, e.g., ethylene, butene, pentene, hexene, heptene, octene, nonene, decene, dodecene, 4-methyl-pentene-1, 3-methyl pentene-1,3,5,5-trimethyl-hexene-1, 5-ethyl-1-nonene, 1,9-decadiene, and combinations thereof. Specific examples of suitable propylene-alpha-olefin copolymers include propylene-ethylene, propylene-butene, propylene-hexene, propylene-octene, and combinations thereof.

Useful semi-crystalline ethylene copolymers are derived from ethylene and an alpha-olefin co-monomer including, e.g., alpha-olefin monomers having at least three carbon atoms, at least four carbon atoms, from three carbon atoms to eight carbon atoms, and combinations of such monomers). Suitable alpha-olefin co-monomers include, e.g., propylene, butene, pentene, hexene, heptene, octene, nonene, decene, dodecene, 4-methyl-pentene-1, 3-methyl pentene-1,3,5,5-trimethyl-hexene-1, 5-ethyl-1-nonene, 1,9-decadiene, and combinations thereof. Specific examples of suitable ethylene-alpha-olefin copolymers include ethylenepropylene, ethylene-butene, ethylene-hexene, ethylene-octene, and combinations thereof.

Suitable semi-crystalline polymers are prepared using a variety of catalysts including, e.g., a single site catalyst (e.g., metallocene catalysts (e.g., metallocene-catalyzed propylene polymers)), multiple single site catalysts, non-metallocene heteroaryl catalysts, and combinations thereof.

Another useful class of additional semi-crystalline polymers is the "crystalline block composite" (CBC) polymers. CBCs are those polymers that include a crystalline ethylene-based polymer (CEP), a crystalline alpha-olefin-based polymer (CAOP), and a block copolymer having a crystalline ethylene block (CEB) and a crystalline alpha-olefin block (CAOB), where the CEB of the block copolymer is essentially the same composition as the CEP in the block composite and the CAOB of the block copolymer is essentially the same composition as the CAOP of the block composite. The compositional split between the amount of CEP and CAOP will be essentially the same as that between the corresponding blocks in the block copolymer. The block copolymers can be linear or branched. Each of the respective block segments can contain long chain branches, but the block copolymer segment is substantially linear as opposed to containing grafted or branched blocks. Useful CBC polymers exhibit a polydispersity index of from 1.7 to 15, 1.8 to 10, from 1.8 to 5, or even from 1.8 to 3.5.

CAOBs are highly crystalline blocks of polymerized alpha olefin units in which the monomer is present in an amount greater than 90 mol %, greater than 93 mol %, greater than 95 mol %, or even greater than 96 mol % and the comonomer content is less than 10 mol %, less than 7 mol %, less than 5 mol %, or even less than 4 mol %. CAOBs with propylene crystallinity have corresponding melting points that are at least 80 °C, at least 100 °C, at least 115 °C, or even at least 120 °C.

CEB refers to blocks of polymerized ethylene units in which the comonomer content is no greater than 10 mol %, from 0 mol % to 10 mol %, from 0 mol % to 7 mol %, or even from 0 mol % to 5 mol %. The CEB has a melting point of at least 75 °C, at least 90 °C, or even at least 100 °C.

Useful semi-crystalline polyolefins are commercially available under a variety of trade designations including, e.g., the VISTAMAXX series of trade designations from ExxonMobil Chemical Company (Houston, Texas) including VISTAMAXX 8880, VISTAMAXX 8780, and VISTAMAXX 8380 propylene-ethylene copolymers, the LICOCENE series of trade designations from Clariant Int'l Ltd. (Muttenz, Switzerland) including, e.g., LICOCENE PP 1502 TP, PP 1602 TP, and PP 2602 TP propylene-ethylene copolymers, and the AFFINITY series of trade designations from The Dow Chemical Company (Midland, Michigan) including AFFINITY GA1900 ethylene-octene copolymer and AFFINITY GP1570 propylene-ethylene copolymer.

The hot melt adhesive composition optionally includes from 0 % by weight to no greater than 30 % by weight, at least 1 % by weight, at least 2 % by weight, no greater than 25 % by weight, no greater than 20 % by weight, no greater than 10 % by weight, no greater than 5 % by weight, or even no greater than 3 % by weight optional additional semi-crystalline polymer.

Other useful classes of polymers include, e.g., amorphous polyalphaolefins including, e.g., Ziegler-Natta catalyzed amorphous polyalphaolefins (e.g., amorphous propylene homopolymers, amorphous propylene-alpha-olefin comonomer copolymers, amorphous polyethylene polymers, amorphous polyethylene-alpha-olefin comonomer copolymers and combinations thereof), elastomers including, e.g., elastomeric block copolymers (e.g., elastomeric block copolymers that includes styrene (e.g., styrene-ethylene/butene-styrene, styrene-ethylene/propylene-styrene and combinations thereof), metallocene-based elastomeric block copolymers, and combinations thereof), and functionalized versions thereof, and combinations thereof.

Useful Ziegler Natta catalyzed amorphous polyalphaolefin polymers are commercially available under a variety of trade designations including, e.g., the REXTAC series of trade designations available from Rextac LLC (Odessa, Texas) and the EASTOFLEX and AERAFIN series of trade designations from Eastman Chemical Company (Kingsport Tennessee).

Useful elastomeric block copolymers are available under a variety of trade designations including, e.g., KRATON G 1657 styrene-ethylene/butylene-styrene block copolymer and G 1652 styrene-ethylene/propylene-styrene block copolymer from Kraton Polymers U.S. LLC (Houston, Texas).

The hot melt adhesive composition optionally includes from 0 % by weight to no greater than 30 % by weight, at least 1 % by weight, at least 2 % by weight, no greater than 25 % by weight, no greater than 20 % by weight, no greater than 10 % by weight, no greater than 5 % by weight, or even no greater than 3 % by weight of an optional additional amorphous polyalphaolefin polymer, elastomeric polymer or combinations thereof.

WAX

The hot melt adhesive composition also includes at least one wax. Useful waxes have a heat of fusion of greater than 58 J/g, or even greater than 70 J/g. Suitable waxes preferably have a melt temperature (Tm) of at least 80 °C, at least 90 °C, at least 100 °C, at least 103 °C, at least 105 °C, at least 110 °C, at least 115 °C, or even at least 120 °C. Examples of suitable waxes include Fischer-Tropsch waxes, polyolefin waxes (e.g., polypropylene waxes and polyethylene waxes), microcrystalline waxes, metallocene waxes, and combinations thereof.

Useful Fischer-Tropsch waxes are commercially available under a variety of trade designations including, e.g., Fischer-Tropsch waxes available under the SASOLWAX series of trade designations from Sasol Wax North America Corporation (Hayward, California) including, e.g., SASOLWAX C80, SASOLWAX H1, and SASOLWAX C105, Fischer-Tropsch waxes, the BARECO series of trade designations from Baker Hughes Inc. (Sugar Land, Texas) including, e.g., BARECO PX-105 Fischer-Tropsch waxes, the SHELLWAX series of trade designations from Shell Malaysia Ltd. (Kuala Lumpur, Malaysia) including, e.g., SHELLWAX SX105 Fischer-Tropsch waxes, and the VESTOWAX series of trade designations from Evonik Industries AG (Germany) including, e.g., VESTOWAX 2050 Fischer-Tropsch wax.

Useful polyethylene waxes are commercially available under a variety of trade designations including, e.g., the EPOLENE series of trade designations from Westlake Chemical Corporation (Houston, Texas) including, e.g., EPOLENE N-21 and N-14 polyethylene waxes, the BARECO series of trade designations from Baker Hughes Inc. (Sugar Land, Texas) including, e.g., BARECO C4040 polyethylene wax, the AC series of trade designations from Honeywell Int'l Inc. (Morristown, New Jersey) including, e.g., A-C 8 and A-C 9 polyethylene waxes, the POLYWAX series of trade designations including POLYWAX 3000 polyethylene wax, POLYWAX 2000 polyethylene wax, and POLYWAX 1000 polyethylene wax, POLYWAX 850 polyethylene wax and POLYWAX 725 polyethylene wax from Baker Hughes Inc. (Houston, Texas), and CWP 400 polyethylene wax from Trecora Chemical, Inc. (Pasedena, Texas).

Useful polypropylene waxes are commercially available under a variety of trade designations including, e.g., EPOLENE N-15 from Westlake Chemical, HONEYWELL AC1089 from Honeywell Int'l Inc., and LICOCENE 6102 from Clariant Int'l Ltd. (Muttenz, Switzerland).

The total wax content in the hot melt adhesive composition is at least 15 % by weight, at least 20 % by weight, from 15 % by weight to 35 % by weight, or even from 15 % by weight to 30 % by weight. The hot melt adhesive composition preferably includes at least 10 % by weight, at least 15 % by weight, at least 20 % by weight, from 10 % by weight to 35 % by weight, from 10 % by weight to 30 % by weight, or even from 15 % by weight to 30 % by weight of a wax having a Tm of at least 100 °C, at least 103 °C, at least 110 °C or even at least 120 °C.

### TACKIFYING AGENT

The hot melt adhesive composition also includes a tackifying agent. Useful tackifying agents have a Tg of at least 40 °C, at least 60 °C, or even at least 80 °C, and Ring and Ball softening point of at least 90 °C. Suitable classes of tackifying agents include, e.g., fully hydrogenated aliphatic and cycloaliphatic hydrocarbon resins, fully hydrogenated aromatic modified aliphatic hydrocarbon resins, and combinations thereof. Examples of useful aliphatic and cycloaliphatic petroleum hydrocarbon resins include, e.g., branched, unbranched, and cyclic C5 resins, C9 resins, and C10 resins, and combinations thereof.

Useful tackifying agents are commercially available under a variety of trade designations including, e.g., the EASTOTAC series of trade designations from Eastman Chemical Company (Kingsport, Tennessee) including, e.g., EASTOTAC H-100R, EASTOTAC H-100L, and EASTOTAC H130W, the ESCOREZ series of trade designations from ExxonMobil Chemical Company (Houston, Texas) including, e.g., ESCOREZ 1310LC, ESCOREZ 5400, ESCOREZ 5637, ESCOREZ 5415, ESCOREZ 5600, ESCOREZ 5615, and ESCOREZ 5690, the WINGTACK series of trade designations from Cray Valley HSC (Exton, Pennsylvania) including, e.g., WINGTACK 86, WINGTACK EXTRA, and WINGTACK 95, the PICCOTAC series of trade designations from Eastman Chemical Company (Kingsport, Tennessee) including, e.g., PICCOTAC 8095 and 1115, the ARKON series of trade designations from Arkawa Europe GmbH (Germany) including, e.g., ARKON P-125, and the REGALITE and REGALREZ series of trade designations from Eastman Chemical Company including, e.g., REGALITE R1125 and REGALREZ 1126.

The hot melt adhesive composition includes at least 5 % by weight, at least 10 % by weight, at least 15 % by weight, at least 20 % by weight, less than 35 % by weight, no greater than 30 % by weight, no greater than 25 % by weight, no greater than 20 % by weight, from 10 % by weight to 35 % by weight, from 15 % by weight to 30 % by weight, from 10 % by weight to 30 % by weight, or even from 10 % by weight to 25 % by weight tackifying agent.

### ADDITIONAL COMPONENTS

The hot melt adhesive composition optionally includes a variety of additional components including, e.g., antioxidants, stabilizers, adhesion promoters, ultraviolet light stabilizers, rheology modifiers, corrosion inhibitors, colorants (e.g., pigments and dyes), fillers, flame retardants, nucleating agents, plasticizers, and combinations thereof.

Useful antioxidants include, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris-(p-nonylphenyl)-phosphite (TNPP) and bis(2,4-di-tert-butylphenyl)4,4'-diphenylene-diphosphonite, di-stearyl-3,3'-thiodipropionate (DSTDP), and combinations thereof. Suitable antioxidants are commercially available under a variety of trade designations including, e.g., the IRGANOX series of trade designations including, e.g., IRGANOX 1010, IRGANOX 565, and IRGANOX 1076 hindered phenolic antioxidants, and IRGAFOS 168 phosphite antioxidant, all of which are available from BASF Corporation (Florham Park, New Jersey), and ETHYL 702 4,4'-methylene bis(2,6-di-tert-butylphenol). When present, the adhesive composition preferably includes from about 0.1 % by weight to about 2 % by weight antioxidant.

### USES

The hot melt adhesive composition can be applied to or incorporated in a variety of articles including, e.g., fibers, substrates made from fibers (e.g., virgin fibers, recycled fibers, synthetic polymer fibers (e.g., nylon, rayon, polyesters, acrylics, polypropylenes, polyethylene, polyvinyl chloride, polyurethane), cellulose fibers (e.g., natural cellulose fibers such as wood pulp), natural fibers (e.g., cotton, silk and wool), and glass fibers, and combinations thereof), release liners, porous substrates, cellulose substrates, sheets (e.g., paper, and fiber sheets), paper products, woven and nonwoven webs (e.g., webs made from fibers (e.g., yarn, thread, filaments, microfibers, blown fibers, and spun fibers), perforated films, and combinations thereof), tape backings, and combinations thereof.

The hot melt adhesive composition is useful for bonding a variety of substrates including, e.g., cardboard, coated cardboard, paperboard, fiber board, virgin and recycled kraft, high and low density kraft, chipboard, treated and coated kraft and chipboard, and corrugated versions of the same, clay coated chipboard carton stock, composites, leather, fibers and substrates made from fibers (e.g., virgin fibers, recycled fibers, synthetic polymer fibers, cellulose fibers, and combinations thereof), release liners, porous substrates (e.g., woven webs, nonwoven webs, and perforated films), cellulose substrates, sheets (e.g., paper, and fiber sheets), paper products, tape backings, and combinations thereof.

The hot melt adhesive composition is useful for bonding a first substrate to a second substrate in a variety of applications and constructions including, e.g., packaging, bags, boxes, cartons, cases, trays, multi-wall bags, articles that include attachments (e.g., straws attached to drink boxes), ream wrap, cigarettes (e.g., plug wrap), filters (e.g., pleated filters and filter frames), bookbinding, paper products including, e.g., paper towels (e.g., multiple use towels), toilet paper, tissues (e.g., facial tissue), wipes, and combinations thereof.

The hot melt adhesive composition can be applied to a substrate in any useful form including, e.g., as a coating (e.g., a continuous coatings and discontinuous coatings (e.g., random, pattern, and array)), as a bead, as a film (e.g., a continuous films and discontinuous films), and combinations thereof, using any suitable application method including, e.g., slot coating, spray coating (e.g., spiral spray, random spraying, and random fiberization (e.g., melt blowing), foaming, extrusion (e.g., applying a bead, fine line extrusion, single screw extrusion, and twin screw extrusion), wheel application, noncontact coating, contacting coating (e.g., direct coating), gravure, engraved roller, roll coating, transfer coating, screen printing, flexographic, "on demand" application methods, and combinations thereof.

In on demand hot melt application systems (which are also referred to as "tank free" and "tankless" systems), hot melt compositions are fed in a solid state (e.g., pellets), to a relatively small heating vessel (relative to traditional hot melt applications systems that include a pot) where the hot melt composition is melted and, typically shortly thereafter, the molten liquid is applied to a substrate. In on demand systems, a relatively large quantity of hot melt composition typically does not remain in a molten state for an extended period of time. In many existing on demand systems, the volume of molten hot melt composition is no greater than about 1 liter, or even no greater than about 500 milliliters, and the hot melt composition is maintained in a molten state for a relatively brief period of time, including, e.g., less than two hours, less than one hour, or even less than 30 minutes. Suitable on demand hot melt adhesive application systems include, e.g., InvisiPac Tank-Free Hot Melt Delivery System from Graco Minnesota Inc. (Minneapolis, Minnesota) and the Freedom Hot Melt Dispensing System from Nordson Corporation (Westlake, Ohio). On demand hot melt adhesive application systems are described in U.S. Patent Publication Nos. 2013-0105039, 2013-0112709, 2013-0112279, and 2014-0042182, and U.S. Patent No. 8,201,717.

The invention will now be described by way of the following examples. All parts, ratios, percentages and amounts stated in the Examples are by weight unless otherwise specified.

### EXAMPLES

### Test Procedures

Test procedures used in the examples include the following. All ratios and percentages are by weight unless otherwise indicated. The procedures are conducted at room temperature (i.e., an ambient temperature of from about 20 °C to about 25 °C) unless otherwise specified.

### Melt Flow Rate Test Method

Melt flow rate (MFR) is determined according to ASTM D1238A at 190 °C using a 2.16 kg load.

### Melt Temperature Test Method

Melt temperature is determined using differential scanning calorimetry (DSC). A 7.25 mg ± 0.25 mg sample is placed into a pan specific to the machine being used (e.g., TA Q2000 DSC V24.11 with standard aluminum pans and lids). The sample is then covered with a specified lid and closed. A pan and lid containing no material are also closed and used as a reference sample. The sample is then loaded onto the differential scanning calorimeter posts and covered with a nitrogen blanket. The sample is then heated at a rate of 60 °C per minute (°C/min) until the sample reaches 190 °C. The sample is then put into an isothermal state for 5 minutes at 190 °C. The sample is then cooled at a rate of 10 °C/min until the sample reaches a temperature of -80 °C. Then the sample is again put into an isothermal state for 5 minutes at -80 °C. The sample is then heated at 10 °C/min until the sample reaches 190 °C. The resulting data is represented in graphical exothermal down format containing Heat Flow versus Temperature. The melt temperature (Tm) is the melt temperature of the peak having the greatest height.

### Viscosity Test Method

Viscosity is determined at the specified temperature in accordance with ASTM D-3236 entitled, "Standard Test Method for Apparent viscosity of Hot Melt Adhesives and Coating Materials," (October 31, 1988), using a Brookfield viscometer, a Brookfield Thermosel heated sample chamber, and a number 27 spindle. The results are reported in mPa·s (centipoise, cP).

### % Fiber Tear WESTROCK 44 Test Method

The percentage fiber tear is the percentage of fiber that covers the area of the adhesive after two substrates, which have been previously bonded together through the adhesive, are separated by force. The percentage of fiber tear using WESTROCK 44 is determined as follows. A bead of adhesive composition measuring 15.24 cm (6 inch) x 0.24 cm (0.094 inch) is applied to a first substrate of WESTROCK 44-pound edge crush C flute corrugated linear board with greater than 80 % recycled fibers using a ROCKTENN bond simulator at an application temperature of 177 °C. Two seconds after the bead of adhesive is applied to the first substrate, the bead of adhesive is contacted with a second substrate of WESTROCK 44-pound edge crush C flute corrugated linear board with greater than 80 % recycled fibers, which is pressed against both the adhesive and the first substrate with a pressure of 0.21 MPa (30 pounds per square inch (psi)) for a period of 2 seconds. The resulting construction is then conditioned at room temperature for at least 4 hours and then conditioned at the specified test temperature for at least 12 hours. The substrates of the construction are then separated from one another at the test temperature (e.g., immediately after removing the sample from the conditioning chamber) by pulling the two substrates apart from one another by hand. The surface of the adhesive composition is observed and the percentage of the surface area of the adhesive composition that is covered by fibers is determined and recorded. A minimum of five samples are prepared and tested for each hot melt adhesive composition. The results are reported in units of % fiber tear.

### % Fiber Tear PRATT Test Method

The percentage of fiber tear using PRATT is determined as described above in the % Fiber Tear WESTROCK 44 Test Method with the exception that the first and second substrates are PRATT 44 pound edge crush test (ECT) with C style flute corrugated liner board that includes 100 % recycled fibers instead of WESTROCK 44-pound corrugated liner board.

### Peel Adhesion Failure Temperature to Kraft Test Method

Peel adhesion failure temperature (PAFT) is determined as follows. A first sheet of kraft paper is prepared by affixing two release liners on the first sheet of kraft. The release liners are separated from each other by a distance of 2.54 cm to form a 2.54 cm channel therebetween, which will accommodate the adhesive composition that is subsequently applied. A small amount of adhesive composition is applied to the channel near the top edge of the first sheet. A second sheet of kraft paper is placed on top of the adhesive composition and the first sheet of kraft paper. A draw down bar is pressed against the top edge of the second sheet, the adhesive composition, and the first sheet, and then drawn down the length of the second sheet from the top edge to the bottom edge of the second sheet of kraft paper to bond the first sheet of kraft paper to the second sheet of kraft paper through the adhesive composition. The draw down bar has a gap, which defines the thickness of the adhesive composition in the channel as the bar is drawn down the length of the sheets of kraft paper. The resulting coated adhesive composition is 2.54 cm (one inch) wide and from 0.2 mm to 0.3 mm (from 8 mils to 12 mils) thick. The sample is formed in such a way that a bond area of 6.45 cm² can be tested in the failure mode. The resulting sample is conditioned at room temperature for at least 12 hours. The sample is positioned in an oven in the peel mode such that the top edge of the first sheet of kraft paper is held in position in the oven by a clamp, and a 100-gram weight is attached to the top edge of the second sheet of kraft paper. The ambient temperature in the oven is ramped from a starting temperature of 25 °C to an ending temperature of 140 °C at a rate of 25 °C/hour. The oven automatically records the temperature at which the sample fails. A minimum of five samples are run for each sample composition. The average PAFT value of the five samples is reported in degrees Celsius.

### Shear Adhesion Failure Temperature to Kraft Test Method

Shear adhesion failure temperature (SAFT) is determined as follows. A first sheet of kraft paper is prepared by affixing two release liners on the first sheet of kraft. The release liners are separated from each other by a distance of 2.54 cm to form a 2.54 cm channel therebetween, which will accommodate the adhesive composition that is subsequently applied. A small amount of adhesive composition is applied to the channel near the top edge of the first sheet. A second sheet of kraft paper is placed on top of the adhesive composition and the first sheet of kraft paper. A draw down bar is pressed against the top edge of the second sheet, the adhesive composition, and the first sheet, and then drawn down the length of the second sheet from the top edge to the bottom edge of the second sheet of kraft paper to bond the first sheet of kraft paper to the second sheet of kraft paper through the adhesive composition. The draw down bar has a gap, which defines the thickness of the adhesive composition in the channel as the bar is drawn down the length of the sheets of kraft paper. The resulting coated adhesive composition is 2.54 cm (one inch) wide and from 0.2 mm to 0.3 mm (from 8 mils to 12 mils) thick. The sample is formed in such a way that a bond area of 6.45 cm² can be tested in the failure mode. The resulting sample is conditioned at room temperature for at least 12 hours. The resulting sample is then positioned in an oven in the shear mode such that the top edge of the first sheet of kraft paper is held in position in the oven by a clamp, and a 500 gram weight is suspended from each sample in the shear mode, i.e., the weight is attached to the bottom edge of the second sheet of kraft paper. The ambient temperature in the oven is ramped from a starting temperature of 25 °C to an ending temperature of 160 °C at a rate of 25 °C/hour. The oven automatically records the temperature at which the sample fails. A minimum of three samples are run for each sample composition. The average SAFT value of the three samples is reported in degrees Celsius.

### Set Time Test Method

Set time is determined according to the following test method. A bead of adhesive composition measuring 10.00 cm by 0.24 cm is applied to a first substrate of PRATT 44-pound edge crush test (ECT) C flute corrugated linear board with 100 % recycled fibers using a MEC ASM-15N Hot Melt Bond Simulator at 177 °C. Two seconds after the bead of adhesive is applied to the first substrate, the bead of adhesive is contacted with the second substrate of PRATT 44-pound edge crush test (ECT) C flute corrugated linear board with 100 % recycled fibers, which is then pressed against the first substrate with a pressure of 0.21 MPa and for a period of time (referred to herein as the compression time) such that the bond area is 5.00 cm by 0.24 cm. The Bond Simulator timer is started when the substrates are compressed. After an initial compression time of 0.5 seconds, the instrument separates the two substrates by pulling on the second substrate in the Z direction and holding the first substrate in a fixed position and the force required to separate the substrates and the amount of fiber tear present on the adhesive composition is measured. Samples are run in triplicate at each compression time. If the three samples fail to exhibit greater than 50 % Fiber Tear for each sample, the compression time is increased by 0.1 second and the test method is repeated until greater than 50 % fiber tear is noted for all three samples. The 50 % fiber tear set time is recorded as the compression time at which the three samples achieve greater than 50 % fiber tear immediately upon separation. The set time is recorded in seconds.

### Heat Stress Resistance (i.e., IOPP) Test Method

Heat stress resistance is measured according to standard number IOPP T-3006 entitled, "Suggested Test Method for Determining the Heat Stress Resistance of Hot Melt Adhesives," using a starting temperature of 48.9 °C (120 °F), a 200 gram load per sample, and five bonded samples per adhesive composition. After each 24 hour period, the number of samples that are no longer supporting the weight is recorded, and the temperature is increased by 2.8 °C (5.0 °F). The pass temperature for each adhesive composition, which is defined as the maximum temperature at which 80 % of the samples remain bonded, is the heat stress resistance and is reported in degrees Celsius (°C).

### Method for Determining Room Temperature Specific Gravity

Specific gravity is determined at room temperature according to the following method. The specific gravity of the isopropanol test solution is determined. A molten hot melt sample composition is poured into the form of three small puddles weighing 1 gram each. The poured sample is observed to confirm that it is well blended and free of air bubbles. If it is well blended and free of air bubbles the method is continued for that sample. The sample is allowed to cool completely. The samples are weighed to four decimal places and the value is recorded as the weight of the sample in air.

A wire support plate that includes a rectangular wire hoop is placed on a balance pan. The wire support plate includes a metal plate of a size that is capable of resting on the balance pan. The wire hoop is attached to opposite edges of the wire support plate on the same face of the plate and extends up approximately 8 inches from the base of the plate. A metal bridge stand that is able to straddle the balance pan without touching it is put through the wire hoop on the support plate to bridge balance pan. A beaker filled with isopropanol is centered on the wire support plate. The specific gravity of the isopropanol is a known chemical property. A small hook is then hung on the top of the wire hoop so it hangs down into the isopropanol in the beaker. The hook is then removed and pressed into the sample to attach the sample to the hook, and the hook is again hung from the wire hoop in such a way that the hot melt sample is completely submerged in the isopropanol. After approximately five seconds the weight is observed and recorded, to four decimal places, as the weight of the sample in isopropanol. The specific gravity (SG) is determined using the following equation.

The Specific Gravity (SG) of the sample = [SG of the isopropanol x weight of the sample weight in air (g)]/[(weight of the sample in air (g))-(the weight of the sample in isopropanol (g))]

The method is repeated for each sample and the average result is reported to three decimal places.

### Tm Analysis of Commercial Waxes

The Tm of SASOL H1 Fischer-Tropsch wax, SASOL C80 Fischer-Tropsch wax, SX 105 Fischer-Tropsch wax, LICOCENE 6102 polypropylene wax, and POLYWAX 2000 polyethylene wax were measured using the Melt Temperature Test Method. SASOL H1 was determined to have a Tm of 88 °C, SASOL C80 was determined to have a Tm of 83 °C, SX 105 was determined to have Tm of 96 °C, LICOCENE 6102 was determined to have a Tm of 128 °C, and POLYWAX 2000 was determined to have a Tm of 126 °C, POLYWAX 1000 was determined to have a Tm of 111 °C, POLYWAX 850 was determined to have a Tm of 104 °C, and POLYWAX 725 was determined to have a Tm of 100 °C.

### COMPARATIVE C1 AND C2

The components of the compositions of Comparative C1 and C2 were combined, at room temperature, in the amounts set forth in Table 1, heated to 177 °C to form a melt, and then mixed at 177 °C to form the hot melt composition. The resulting compositions were tested according to the Specific Gravity, Viscosity, Set Time, % Fiber Tear PRATT, % Fiber Tear WESTROCK 44, SAFT, PAFT and IOPP test methods, where indicated. The results are set forth below in Table 1.

### EXAMPLES E1-E29

The components of the hot melt adhesive compositions of Examples E1-E29 were combined at room temperature in the amounts set forth in Tables 1-3 (in percent), then heated to 177 °C, and then mixed at 177 °C to form a hot melt adhesive composition. The resulting hot melt adhesive compositions were tested according to the Specific Gravity, Viscosity, Set Time, % Fiber Tear PRATT, % Fiber Tear WESTROCK 44, SAFT, PAFT and IOPP test methods, where indicated. The results are set forth below in Tables 1-3.

**Table 1**

| | C1 | C2 | E1 | E2 | E3 | E4 | E5 | E6 | E7 | E8 | E9 | E10 |
|---|---|---|---|---|---|---|---|---|---|---|---|---|
| IRGANOX 1076 | 0.2 | 0.2 | 0.2 | 0.2 | 0.2 | 0.2 | 0.2 | 0.2 | 0.2 | 0.2 | 0.2 | 0.2 |
| IRGANOX 1010 | 0.5 | 0.5 | 0.5 | 0.5 | 0.5 | 0.5 | 0.5 | 0.5 | 0.5 | 0.5 | 0.5 | 0.5 |
| KOATTRO PBM 1500M | 0 | 0 | 55 | 60 | 60 | 55 | 55 | 60 | 60 | 60 | 60 | 60 |
| KOATTRO PBM 600M | 45.3 | 45.3 | 0 | 0 | 0 | 0 | 0 | 0 | 0 | 0 | 0 | 0 |
| AFFINITY GP1570 | 0 | 0 | 0 | 0 | 0 | 0 | 0 | 0 | 0 | 0 | 0 | 0 |
| TPC 1160 | 0 | 0 | 0 | 0 | 5 | 10 | 5 | 0 | 5 | 0 | 0 | 0 |
| SASOL H1 | 20 | 0 | 0 | 0 | 0 | 0 | 0 | 0 | 0 | 0 | 0 | 25 |
| SX105 | 0 | 20 | 20 | 20 | 15 | 15 | 20 | 20 | 20 | 25 | 25 | 0 |
| SASOL C80 | 0 | 0 | 0 | 0 | 0 | 0 | 0 | 0 | 0 | 0 | 0 | 0 |
| ESCOREZ 5400 | 0 | 0 | 0 | 0 | 0 | 0 | 0 | 19.3 | 0 | 14.3 | 0 | 0 |
| EASTOTAC H130W | 34 | 34 | 24.3 | 19.3 | 19.3 | 19.3 | 19.3 | 0 | 14.3 | 0 | 14.3 | 14.3 |
| Viscosity at 177 °C | 1,650 | 1,750 | 1,315 | 1,523 | 1,737 | 1,380 | 1,217 | 1,385 | 1,418 | 1,188 | 1,263 | 1,143 |
| Specific Gravity | 0.945 | 0.938 | 0.928 | 0.923 | 0.914 | 0.915 | 0.920 | 0.919 | 0.912 | 0.917 | 0.918 | 0.910 |
| Set Time | 0.6 | 0.4 | 0.6 | 0.7 | 1.0 | 1.0 | 0.7 | 0.9 | 0.8 | 0.8 | 0.8 | 0.8 |
| % Fiber Tear Pratt | | | | | | | | | | | | |
| -29 °C | 0 | 0 | 0 | 30 | 11 | 4 | 0 | 0 | 0 | 0 | 0 | 1 |
| -18 °C | 0 | 0 | 0 | 18 | 2 | 58 | 0 | 0 | 0 | 14 | 0 | 0 |
| 4 °C | 0 | 0 | 47 | 52 | 46 | 38 | 0 | 36 | 35 | 4 | 0 | 13 |
| 23 °C | 0 | 0 | 47 | 79 | 91 | 92 | 56 | 94 | 77 | 60 | 37 | 66 |
| 54 °C | 96 | 99 | 98 | 100 | 93 | 95 | 100 | 85 | 81 | 74 | 68 | 73 |
| 60 °C | 100 | 100 | 91 | 94 | 96 | 85 | 98 | 87 | 66 | 48 | 67 | 56 |
| 65 °C | 100 | 100 | 90 | 82 | 53 | 41 | 65 | 74 | 40 | 39 | 37 | 53 |

| % Fiber Tear WESTROCK 44 | | | | | | | | | | | | |
|---|---|---|---|---|---|---|---|---|---|---|---|---|
| -29 °C | 0 | 60 | 89 | 98 | 98 | 89 | 76 | 93 | 98 | 99 | 94 | 97 |
| -18 °C | 0 | 85 | 96 | 98 | 96 | 96 | 61 | 84 | 97 | 92 | 93 | 97 |
| 4 °C | 0 | 78 | 99 | 92 | 100 | 99 | 91 | 97 | 95 | 99 | 97 | 98 |
| 23 °C | 0 | 59 | 99 | 99 | 100 | 100 | 100 | 99 | 97 | 99 | 99 | 100 |
| 54 °C | 100 | 100 | 100 | 100 | 100 | 100 | 100 | 100 | 100 | 99 | 99 | 94 |
| 60 °C | 100 | 100 | 100 | 100 | 100 | 99 | 100 | 100 | 98 | 90 | 100 | 93 |
| 65 °C | 100 | 100 | 100 | 100 | 100 | 94 | 99 | 99 | 93 | 86 | 89 | 40 |
| SAFT (°C) | NT | NT | 93 | 94 | 88 | 86 | 92 | 92 | 93 | 97 | 96 | 87 |
| PAFT (°C) | NT | 53 | 50 | 38 | 42 | 32 | 34 | 38 | 34 | 34 | 37 | 38 |
| IOPP | NT | 68 | NT | NT | NT | NT | NT | NT | NT | NT | NT | NT |

| | | | | | | | | | | | | |
|---|---|---|---|---|---|---|---|---|---|---|---|---|
| IRGANOX 1076= antioxidant IRGANOX 1010 = antioxidant KOATTRO PBM 1500M = random polybutene-1/ethylene copolymer having an MFR of 1500 g/10 min at 190 °C and a density of 0.89 g/cm³ as reported by the manufacturer, LyondellBasell Industries Holdings, B.V., Netherlands KOATTRO PBM 600M = random polybutene-1/ethylene copolymer having an MFR of 600 g/10 min at 190 °C and a density of 0.89 g/cm³ as reported by the manufacturer, LyondellBasell AFFINITY GP1570 = propylene-ethylene copolymer (The Dow Chemical Company, Midland, Michigan) TPC 1160 = polyisobutylene (The TPC Group, Houston, Texas) SASOL H1 = Fischer-Tropsch wax having a melt temperature of 88 °C (Sasol Wax North America Corporation, Hayward, California) SX105 = Shell GTL SARAWAX SX105 Fischer-Tropsch wax having a melt temperature of 96 °C (Shell Chemical, Texas) SASOL C80 = Fischer-Tropsch wax having a melt temperature of 83 °C (Sasol Wax North America Corporation, Hayward, California) ESCOREZ 5400 = tackifying resin (ExxonMobil Chemical Company, Houston, Texas) EASTOTAC H130W = tackifying resin (Eastman Chemical Company, Kingsport, Tennessee) | | | | | | | | | | | | |

**Table 2**

| | E11 | E12 | E13 | E14 | E15 | E16 | E17 | E18 | E19 | E20 | E21 |
|---|---|---|---|---|---|---|---|---|---|---|---|
| IRGANOX 1076 | 0.2 | 0.2 | 0.2 | 0.2 | 0.2 | 0.2 | 0.2 | 0.2 | 0.2 | 0.2 | 0.2 |
| IRGANOX 1010 | 0.5 | 0.5 | 0.5 | 0.5 | 0.5 | 0.5 | 0.5 | 0.5 | 0.5 | 0.5 | 0.5 |
| KOATTRO PBM 1500M | 43 | 60 | 60 | 50 | 55 | 50 | 50 | 55 | 55 | 55 | 55 |
| AFFINITY GP1570 | 10 | 0 | 0 | 0 | 0 | 0 | 0 | 0 | 0 | 0 | 0 |
| SX105 | 22 | 0 | 0 | 0 | 0 | 0 | 0 | 0 | 0 | 0 | 0 |
| LICOCENE 6102 | 0 | 25 | 0 | 25 | 25 | 0 | 15 | 15 | 0 | 0 | 0 |
| POLYWAX 2000 | 0 | 0 | 25 | 0 | 0 | 25 | 10 | 10 | 0 | 0 | 0 |
| POLYWAX 1000 | 0 | 0 | 0 | 0 | 0 | 0 | 0 | 0 | 25 | 0 | 0 |
| POLYWAX 850 | 0 | 0 | 0 | 0 | 0 | 0 | 0 | 0 | 0 | 25 | 0 |
| POLYWAX 725 | 0 | 0 | 0 | 0 | 0 | 0 | 0 | 0 | 0 | 0 | 25 |
| EASTOTAC H130W | 24.3 | 14.3 | 14.3 | 24.3 | 19.3 | 24.3 | 24.3 | 19.3 | 19.3 | 19.3 | 19.3 |
| Viscosity at 177 °C | 1,690 | 2,090 | 2,340 | 1,608 | 1,850 | 1,592 | 1,433 | 1,663 | 1,105 | 1,005 | 962 |
| Specific Gravity | 0.923 | 0.902 | 0.921 | 0.916 | 0.909 | 0.939 | 0.926 | 0.918 | 0.923 | 0.925 | 0.923 |
| Set Time | 0.4 | >2 | 1.1 | >3 | >3 | 0.4 | 0.7 | 1.0 | 0.4 | 0.4 | 0.5 |

| % Fiber Tear PRATT | | | | | | | | | | | |
|---|---|---|---|---|---|---|---|---|---|---|---|
| -29 °C | 0 | 97 | 88 | 95 | 97 | 91 | 100 | 100 | 100 | 52 | 5 |
| -18 °C | 0 | 95 | 90 | 60 | 93 | 95 | 86 | 100 | 99 | 15 | 7 |
| 4 °C | 36 | 99 | 86 | 99 | 98 | 98 | 100 | 100 | 93 | 42 | 36 |
| 23 °C | 79 | 96 | 81 | 88 | 100 | 99 | 100 | 100 | 96 | 86 | 80 |
| 54 °C | 100 | 93 | 98 | 98 | 99 | 100 | 100 | 100 | 99 | 97 | 98 |
| 60 °C | 98 | 99 | 89 | 95 | 97 | 100 | 100 | 100 | 96 | 94 | 88 |
| 65 °C | 100 | 98 | 82 | 99 | 95 | 100 | 97 | 96 | 80 | 79 | 74 |

| % Fiber Tear WESTROCK 44 | | | | | | | | | | | |
|---|---|---|---|---|---|---|---|---|---|---|---|
| -29 °C | 98 | 100 | 100 | 95 | 99 | 100 | 100 | 100 | 100 | 97 | 94 |
| -18 °C | 95 | 99 | 100 | 99 | 97 | 100 | 100 | 100 | 100 | 99 | 99 |
| 4 °C | 99 | 100 | 100 | 100 | 100 | 100 | 100 | 100 | 100 | 99 | 94 |
| 23 °C | 100 | 100 | 100 | 100 | 100 | 100 | 100 | 100 | 100 | 98 | 98 |
| 54 °C | 100 | 100 | 100 | 100 | 100 | 100 | 100 | 100 | 100 | 100 | 100 |
| 60 °C | 100 | 100 | 100 | 100 | 100 | 100 | 100 | 100 | 100 | 100 | 100 |
| 65 °C | 99 | 100 | 100 | 100 | 99 | 100 | 100 | 100 | 100 | 100 | 100 |
| SAFT (°C) | 87 | 94 | 96 | 92 | 93 | 92 | 96 | 97 | 96 | 91 | 88 |
| PAFT (°C) | 46 | 44 | 51 | 51 | 47 | 63 | 61 | 54 | 47 | 37 | 35 |
| IOPP | NT | NT | NT | NT | NT | NT | NT | NT | NT | NT | NT |

| | | | | | | | | | | | |
|---|---|---|---|---|---|---|---|---|---|---|---|
| LICOCENE 6102 = polypropylene wax having a melt temperature of 128 °C (Clariant Int'l Ltd., Muttenz, Switzerland) POLYWAX 2000 = polyethylene wax having a melt temperature of 126 °C (Baker Hughes Inc., Houston, Texas) POLYWAX 1000 = polyethylene wax having a melt temperature of 111 °C (Baker Hughes) POLYWAX 850 = polyethylene wax having a melt temperature of 104 °C (Baker Hughes) POLYWAX 725 = polyethylene wax having a melt temperature of 100 °C (Baker Hughes) | | | | | | | | | | | |

**Table 3**

| | E22 | E23 | E24 | E25 | E26 | E27 | E28 | E29 |
|---|---|---|---|---|---|---|---|---|
| IRGANOX 1076 | 0.2 | 0.2 | 0.2 | 0.2 | 0.2 | 0.2 | 0.2 | 0.2 |
| IRGANOX 1010 | 0.5 | 0.5 | 0.5 | 0.5 | 0.5 | 0.5 | 0.5 | 0.5 |
| KOATTRO PBM 1200M | 0 | 0 | 0 | 0 | 55 | 50 | 50 | 50 |
| KOATTRO PBM 1500M | 55 | 50 | 60 | 55 | 0 | 0 | 0 | 0 |
| SASOL H1 | 10 | 0 | 0 | 0 | 0 | 0 | 0 | 0 |
| LICOCENE 6102 | 15 | 0 | 0 | 0 | 25 | 25 | 20 | 15 |
| POLYWAX 2000 | 0 | 0 | 0 | 0 | 0 | 0 | 5 | 10 |
| SASOL C80 | 0 | 25 | 25 | 25 | 0 | 0 | 0 | 0 |
| ESCOREZ 5400 | 0 | 0 | 0 | 0 | 19.3 | 24.3 | 24.3 | 24.3 |
| EASTOTAC H130W | 19.3 | 24.3 | 14.3 | 19.3 | 0 | 0 | 0 | 0 |
| Viscosity at 177 °C | 1380 | 675 | 970 | 822 | 1,800 | 1,442 | 1,365 | 1,350 |
| Specific Gravity | 0.917 | 0.925 | 0.913 | 0.920 | 0.916 | 0.924 | 0.928 | 0.934 |
| Set Time | 1.1 | 0.6 | 1.2 | 0.9 | 5 | 5 | 1.7 | 1 |
| % Fiber Tear PRATT | | | | | | | | |
| -29 °C | 0 | 0 | 0 | 0 | 97 | 100 | 79 | 100 |
| -18 °C | 0 | 0 | 0 | 0 | 82 | 83 | 65 | 87 |
| 4 °C | 0 | 0 | 57 | 27 | 61 | 94 | 85 | 92 |
| 23 °C | 37 | 82 | 87 | 77 | 88 | 83 | 44 | 38 |
| 54 °C | 100 | 99 | 99 | 100 | 95 | 94 | 98 | 99 |
| 60 °C | 98 | 97 | 96 | 98 | 93 | 90 | 91 | 98 |
| 65 °C | 95 | 94 | 76 | 63 | 87 | 99 | 98 | 99 |

| % Fiber Tear WESTROCK 44 | | | | | | | | |
|---|---|---|---|---|---|---|---|---|
| -29 °C | 80 | 26 | 20 | 2 | 98 | 100 | 100 | 99 |
| -18 °C | 36 | 7 | 44 | 19 | 96 | 99 | 96 | 99 |
| 4 °C | 68 | 56 | 82 | 32 | 100 | 100 | 100 | 100 |
| 23 °C | 98 | 98 | 97 | 90 | 99 | 100 | 93 | 98 |
| 54 °C | 99 | 100 | 92 | 100 | 100 | 100 | 100 | 100 |
| 60 °C | 100 | 100 | 100 | 100 | 100 | 100 | 100 | 100 |
| 65 °C | 99 | 100 | 96 | 100 | 100 | 100 | 100 | 100 |
| PAFT (°C) | 53 | 47 | 43 | 47 | 80 | 65 | 74 | 79 |
| SAFT (°C) | 91 | 73 | 74 | 73 | 88 | 86 | 92 | 89 |

| | | | | | | | | |
|---|---|---|---|---|---|---|---|---|
| KOATTRO PBM 1200M = random polybutene-1/ethylene copolymer having an MFR of 1200 g/10 min at 190 °C and a density of 0.908 g/cm³ as reported by the manufacturer, LyondellBasell. | | | | | | | | |

Other embodiments are within the claims.

## Claims

1. A hot melt adhesive composition comprising:
at least 40 % by weight metallocene-catalyzed polybutene-1, the metallocene-catalyzed polybutene-1 being selected from the group consisting of polybutene-1 homopolymer, polybutene-1 copolymer, and combinations thereof, the metallocene-catalyzed polybutene-1 comprising at least 30 % by weight, based on the weight of the hot melt adhesive composition, of a first metallocene-catalyzed polybutene-1 having a melt flow rate of at least 1000 grams per 10 minutes (g/10 min) at 190 °C and 2.16 kg load;
tackifying agent; and
at least 15 % by weight wax having a heat of fusion greater than 58 Joules per gram (J/g) and a viscosity no greater than 750 mPa·s (centipoise, cP) at 190 °C,
the hot melt adhesive composition having a specific gravity of less than 0.95, determined as described in the description.

2. The hot melt adhesive composition of claim 1 comprising at least 50 % by weight metallocene-catalyzed polybutene-1.

3. The hot melt adhesive composition of claim 1 comprising at least 55 % by weight metallocene-catalyzed polybutene-1.

4. The hot melt adhesive composition of claim 1 comprising
at least 45 % by weight metallocene-catalyzed polybutene-1, and
at least 15 % by weight of a wax having a melt temperature (Tm) of at least 100 °C.

5. The hot melt adhesive composition of any one of claims 1-4, wherein the first metallocene-catalyzed polybutene-1 has a specific gravity of no greater than 0.91, determined as described in the description.

6. The hot melt adhesive composition of any one of claims 1-5, wherein the wax comprises at least 10 % by weight, based on the weight of the hot melt adhesive composition, of a wax having a Tm at least 103 °C.

7. The hot melt adhesive composition of any one of claims 1-5, wherein the wax comprises at least 15 % by weight, based on the weight of the hot melt adhesive composition, of a wax having a Tm at least 103 °C.

8. The hot melt adhesive composition of any one of claims 1-7, wherein the wax comprises at least 15 % by weight, based on the weight of the hot melt adhesive composition, of a wax having a Tm at least 110 °C.

9. The hot melt adhesive composition of any one of claims 1-8, wherein the hot melt adhesive composition has a specific gravity of no greater than 0.94, determined as described in the description.

10. The hot melt adhesive composition of any one of claims 1-9, wherein the hot melt adhesive composition has a viscosity of no greater than 3500 mPa·s (centipoise) at 177 °C.

11. The hot melt adhesive composition of any one of claims 1-10, wherein the first metallocene-catalyzed polybutene-1 has a melt flow rate greater than 1300 g/10 min at 190 °C and 2.16 kg load.

12. The hot melt adhesive composition of any one of claims 1-11, wherein the metallocene-catalyzed polybutene-1 further comprises a second metallocene-catalyzed polybutene-1, the second metallocene-catalyzed polybutene-1 having a melt flow rate less than 800 g/10 min at 190 °C and 2.16 kg load, and a specific gravity less than 0.92, determined as described in the description.

13. The hot melt adhesive composition of any one of claims 1-11, wherein the metallocene-catalyzed polybutene-1 further comprises a second metallocene-catalyzed polybutene-1, the second metallocene-catalyzed polybutene-1 having a melt flow rate from 1000 g/10 min to 1300 g/10 min at 190 °C and 2.16 kg load.

14. The hot melt adhesive composition of any one of claims 1-13 further comprising a semi-crystalline polymer selected from the group consisting of propylene/ethylene copolymer, ethylene/propylene copolymer, and combinations thereof.

15. The hot melt adhesive composition of any one of claims 1-14 comprising no greater than 30 % by weight tackifying agent.

16. The hot melt adhesive composition of any one of claims 1-14 comprising no greater than 25 % by weight tackifying agent.

17. A package comprising:
the hot melt adhesive composition of any one of claims 1-16;
a first substrate comprising fibers; and
a second substrate comprising fibers, the second substrate bonded to the first substrate through the adhesive composition.

## Patentansprüche

1. Schmelzklebstoffzusammensetzung, umfassend:
mindestens 40 Gew.-% metallocenkatalysiertes Polybuten-1, wobei das metallocenkatalysierte Polybuten-1 ausgewählt ist aus der Gruppe bestehend aus Polybuten-1-Homopolymer, Polybuten-1-Copolymer und Kombinationen davon, wobei das metallocenkatalysierte Polybuten-1 mindestens 30 Gew.-%, bezogen auf das Gewicht der Schmelzklebstoffzusammensetzung, eines ersten metallocenkatalysierten Polybuten-1 mit einer Schmelzflussrate von mindestens 1000 Gramm pro 10 Minuten (g/10 min) bei 190 °C und 2.16 kg Belastung;
Klebrigmacher; und
mindestens 15 Gew.-% Wachs mit einer Schmelzwärme von mehr als 58 Joule pro Gramm (J/g) und einer Viskosität von höchstens 750 mPa·s (Centipoise, cP) bei 190 °C,
wobei die Schmelzklebstoffzusammensetzung ein spezifisches Gewicht von weniger als 0,95 aufweist, bestimmt wie in der Beschreibung angegeben.

2. Schmelzklebstoffzusammensetzung nach Anspruch 1, umfassend mindestens 50 Gew.-% metallocenkatalysiertes Polybuten-1.

3. Schmelzklebstoffzusammensetzung nach Anspruch 1, umfassend mindestens 55 Gew.-% metallocenkatalysiertes Polybuten-1.

4. Schmelzklebstoffzusammensetzung nach Anspruch 1, umfassend:
mindestens 45 Gew.-% metallocenkatalysiertes Polybuten-1 und
mindestens 15 Gew.-% eines Wachses mit einer Schmelztemperatur (Tm) von mindestens 100 °C.

5. Schmelzklebstoffzusammensetzung nach einem der Ansprüche 1 bis 4, wobei das erste metallocenkatalysierte Polybuten-1 ein spezifisches Gewicht von nicht mehr als 0,91 aufweist, bestimmt wie in der Beschreibung angegeben.

6. Schmelzklebstoffzusammensetzung nach einem der Ansprüche 1 bis 5, wobei das Wachs mindestens 10 Gew.-%, bezogen auf das Gewicht der Schmelzklebstoffzusammensetzung, eines Wachses mit einer Tm von mindestens 103 °C umfasst.

7. Schmelzklebstoffzusammensetzung nach einem der Ansprüche 1-5, wobei das Wachs mindestens 15 Gew.-%, bezogen auf das Gewicht der Schmelzklebstoffzusammensetzung, eines Wachses mit einer Tm von mindestens 103 °C umfasst.

8. Schmelzklebstoffzusammensetzung nach einem der Ansprüche 1-7, wobei das Wachs mindestens 15 Gew.-%, bezogen auf das Gewicht der Schmelzklebstoffzusammensetzung, eines Wachses mit einer Tm von mindestens 110 °C umfasst.

9. Schmelzklebstoffzusammensetzung nach einem der Ansprüche 1 bis 8, wobei die Schmelzklebstoffzusammensetzung ein spezifisches Gewicht von nicht mehr als 0,94 aufweist, bestimmt wie in der Beschreibung angegeben.

10. Schmelzklebstoffzusammensetzung nach einem der Ansprüche 1-9, wobei die Schmelzklebstoffzusammensetzung eine Viskosität von nicht mehr als 3500 mPa·s (Centipoise) bei 177 °C aufweist.

11. Schmelzklebstoffzusammensetzung nach einem der Ansprüche 1 bis 10, wobei das erste metallocenkatalysierte Polybuten-1 eine Schmelzflussrate von mehr als 1300 g/10 min bei 190 °C und 2,16 kg Belastung aufweist.

12. Schmelzklebstoffzusammensetzung nach einem der Ansprüche 1 bis 11, wobei das metallocenkatalysierte Polybuten-1 ferner ein zweites metallocenkatalysiertes Polybuten-1 umfasst, wobei das zweite metallocenkatalysierte Polybuten-1 eine Schmelzflussrate von weniger als 800 g/10 min bei 190 °C und 2,16 kg Belastung und ein spezifisches Gewicht von weniger als 0,92 aufweist, bestimmt wie in der Beschreibung angegeben.

13. Schmelzklebstoffzusammensetzung nach einem der Ansprüche 1 bis 11, wobei das metallocenkatalysierte Polybuten-1 ferner ein zweites metallocenkatalysiertes Polybuten-1 umfasst, wobei das zweite metallocenkatalysierte Polybuten-1 eine Schmelzflussrate von 1000 g/10 min bis 1300 g/10 min bei 190 °C und 2,16 kg Belastung aufweist.

14. Schmelzklebstoffzusammensetzung nach einem der Ansprüche 1-13, die ferner ein teilkristallines Polymer enthält, das aus der Gruppe ausgewählt ist, die aus Propylen/Ethylen-Copolymer, Ethylen/Propylen-Copolymer, und Kombinationen davon besteht.

15. Schmelzklebstoffzusammensetzung nach einem der Ansprüche 1 bis 14, die nicht mehr als 30 Gew.-% Klebrigmacher enthält.

16. Schmelzklebstoffzusammensetzung nach einem der Ansprüche 1 bis 14, die nicht mehr als 25 Gew.-% Klebrigmacher enthält.

17. Verpackung, umfassend:
die Schmelzklebstoffzusammensetzung nach einem der Ansprüche 1-16;
ein erstes Substrat umfassend Fasern; und
ein zweites Substrat umfassend Fasern , wobei das zweite Substrat durch die Klebstoffzusammensetzung mit dem ersten Substrat verbunden ist.

## Revendications

1. Une composition adhésive thermofusible comprenant :
au moins 40 % en poids de polybutène-1 formé par catalyse avec un métallocène, le polybutène-1 formé par catalyse avec un métallocène étant choisi dans le groupe constitué par un homopolymère de polybutène-1, un copolymère de polybutène-1 et des combinaisons de ceux-ci, le polybutène-1 formé par catalyse avec un métallocène comprenant au moins 30 % en poids, par rapport au poids de la composition adhésive thermofusible, d'un premier polybutène-1 formé par catalyse avec un métallocène ayant un indice de fluidité à chaud d'au moins 1000 grammes par 10 minutes (g/10 min) à 190°C et sous une charge de 2,16kg ;
un agent tackifiant ; et
au moins 15 % en poids de cire ayant une chaleur de fusion supérieure à 58 joules par gramme (J/g) et une viscosité non supérieure à 750 mPa s (centipoise, cP) à 190°C,
la composition adhésive thermofusible ayant une densité spécifique inférieure à 0,95, déterminée comme décrit dans la description.

2. La composition adhésive thermofusible selon la revendication 1 comprenant au moins 50 % en poids de polybutène-1 formé par catalyse avec un métallocène.

3. La composition adhésive thermofusible selon la revendication 1 comprenant au moins 55 % en poids de polybutène-1 formé par catalyse avec un métallocène.

4. La composition adhésive thermofusible selon la revendication 1 comprenant
au moins 45 % en poids de polybutène-1 formé par catalyse avec un métallocène, et
au moins 15 % en poids d'une cire ayant une température de fusion (Tm) d'au moins 100°C.

5. La composition adhésive thermofusible selon l'une quelconque des revendications 1 à 4, dans laquelle le premier polybutène-1 formé par catalyse avec un métallocène a une densité spécifique non supérieure à 0,91, déterminée comme décrit dans la description.

6. La composition adhésive thermofusible selon l'une quelconque des revendications 1 à 5, dans laquelle la cire comprend au moins 10 % en poids, par rapport au poids de la composition adhésive thermofusible, d'une cire ayant une Tm d'au moins 103°C.

7. La composition adhésive thermofusible selon l'une quelconque des revendications 1 à 5, dans laquelle la cire comprend au moins 15 % en poids, par rapport au poids de la composition adhésive thermofusible, d'une cire ayant une Tm d'au moins 103°C.

8. La composition adhésive thermofusible selon l'une quelconque des revendications 1 à 7, dans laquelle la cire comprend au moins 15 % en poids, par rapport au poids de la composition adhésive thermofusible, d'une cire ayant une Tm d'au moins 110°C.

9. La composition adhésive thermofusible selon l'une quelconque des revendications 1 à 8, dans laquelle la composition adhésive thermofusible a une densité spécifique non supérieure à 0,94, déterminée comme décrit dans la description.

10. La composition adhésive thermofusible selon l'une quelconque des revendications 1 à 9, dans laquelle la composition adhésive thermofusible a une viscosité non supérieure à 3500 mPa s (centipoise) à 177°C.

11. La composition adhésive thermofusible selon l'une quelconque des revendications 1 à 10, dans laquelle le premier polybutène-1 formé par catalyse avec un métallocène a un indice de fluidité à chaud supérieur à 1300g/10 min à 190°C et sous une charge de 2,16kg.

12. La composition adhésive thermofusible selon l'une quelconque des revendications 1 à 11, dans laquelle le polybutène-1 formé par catalyse avec un métallocène comprend en outre un deuxième polybutène-1 formé par catalyse avec un métallocène, le deuxième polybutène-1 formé par catalyse avec un métallocène ayant un indice de fluidité à chaud inférieur à 800g/10 min à 190°C et sous une charge de 2,16kg, et une densité spécifique inférieure à 0,92, déterminée comme décrit dans la description.

13. La composition adhésive thermofusible selon l'une quelconque des revendications 1 à 11, dans laquelle le polybutène-1 formé par catalyse avec un métallocène comprend en outre un deuxième polybutène-1 formé par catalyse avec un métallocène, le deuxième polybutène-1 formé par catalyse avec un métallocène ayant un indice de fluidité à chaud de 1000g/10 min à 1300g/10 min à 190°C et sous une charge de 2,16kg.

14. La composition adhésive thermofusible selon l'une quelconque des revendications 1 à 13, comprenant en outre un polymère semi-cristallin choisi dans le groupe constitué par un copolymère propylène/éthylène, un copolymère éthylène/propylène et des combinaisons de ceux-ci.

15. La composition adhésive thermofusible selon l'une quelconque des revendications 1 à 14, ne comprenant pas plus de 30 % en poids d'agent tackifiant.

16. La composition adhésive thermofusible selon l'une quelconque des revendications 1 à 14, ne comprenant pas plus de 25 % en poids d'agent tackifiant.

17. Un emballage comprenant :
la composition adhésive thermofusible selon l'une quelconque des revendications 1 à 16 ;
un premier substrat comprenant des fibres ; et
un deuxième substrat comprenant des fibres, le deuxième substrat étant lié au premier substrat au moyen de la composition adhésive.
